# EUROPEAN PATENT APPLICATION

(11) **EP 4 752 852 A1**
(43) Date of publication of application: **03.06.2026**
(21) Application number: 25161683.5
(22) Date of filing: 04.03.2025
(51) Int. Cl.: G06V 10/82, G06V 20/52, B25J 9/16

(54) **DYNAMIC HAZARD DETECTION AND DEMARCATION IN A FACTORY**

(30) Priority: 28.11.2024 IT 202400027006
(71) Applicant: Politecnico di Milano, 20133 Milano (IT)
(72) Inventor: Urgo, Marcello, 20127 MILANO (IT); Berardinucci, Francesco, 66023 CHIETI (IT)
(74) Representative: Bringer IP

(57) **Abstract**

The dynamic demarcation of danger zones in a factory floor includes remote sensing an arrangement of objects on the factory floor, such as a proximity of one object to another object on the factory floor, or a proximity of an object on the factory floor to a location at which a human is proximate. Dynamic demarcation also includes determining a risk factor for the arrangement. Dynamic demarcation additionally includes comparing the risk factor to a threshold value. Finally, dynamic demarcation includes responding to the risk factor exceeding the threshold value by defining a boundary.

## Description

### BACKGROUND OF THE INVENTION

### Field of the Invention

The present invention relates to the technical field of factory safety and more particularly to demarcating portions of a factory floor responsive to a determination of a hazardous condition at the demarcated portions of the factory floor.

### Description of the Related Art

Factory safety is of utmost importance, and the failure to effectively detect hazardous zones on the factory floor can be a matter of life or death. Ensuring that all potential hazards are identified and managed can be crucial for maintaining a safe working environment. The traditional approach to determining hazardous zones in factories has relied heavily on manual assessments and physical barriers. Safety officers and inspectors would walk through the factory floor, visually inspecting and identifying potential hazards. While this method can be effective to some extent, it is also prone to errors and inconsistencies. Human judgment can vary, and the dynamic nature of factory environments means that hazards can change rapidly. As a result, manual assessments may not always capture the full scope of potential risks. The subjective nature of human assessments can lead to overlooked hazards, which can compromise the safety of workers.

Conventional technological approaches to hazard detection supplement manual approaches and involve computer-processed object detection and the resulting alerting of a dangerous condition in association with the detection of the object. Such alerts generally involve audio or visual alerts such as a strobing light or audible alarm. The object detection usually is performed with the assistance of proximity detection mechanisms like radio frequency identification (RFID) tag detection. The use of technology in this manner ensures that hazards are continuously monitored and updated in real-time.

Despite advancements in hazardous condition detection, the complex and ever-changing nature of the factory floor necessitates a more robust and thorough solution. To wit, typically on the modern factory floor, machinery, raw materials, and finished products are constantly moved and rearranged. In some instances, the presence of heavy machinery at a location proximate to a worker presents a hazard should the heavy machinery fall onto or collide with the worker. Likewise, while some objects on the factory floor alone are inert and present no danger, when in proximity to other objects, the combination can present a hazardous risk.

This dynamic environment thus requires continuous monitoring and re-evaluation of hazardous zones. As factory operations evolve, new hazards can emerge, and existing hazards can become more or less severe. Therefore, an ongoing assessment process is critical for ensuring the safety of all personnel on the factory floor.

### BRIEF SUMMARY OF THE INVENTION

Embodiments of the present invention address technical deficiencies of the art in respect to factory safety assurance in light of changing hazard locations. To that end, embodiments of the present invention provide for a novel and non-obvious method for the dynamic demarcation of danger zones in a factory floor. Embodiments of the present invention also provide for a novel and non-obvious computing device adapted to perform the foregoing method. Finally, embodiments of the present invention provide for a novel and non-obvious data processing system incorporating the foregoing device in order to perform the foregoing method.

In one embodiment of the invention, a method for dynamic demarcation of danger zones in a factory floor includes remote sensing an arrangement of objects on the factory floor, such as a proximity of one object to another object on the factory floor. The method also includes determining a risk factor from with the arrangement and receiving from the determination a risk factor for the arrangement, for example, by querying a risk factor table, or by subjecting the arrangement to formulaic processing as a parameter to a risk factor determination rule or function. The method additionally includes comparing the risk factor to a threshold value. Finally, the method includes responding to the risk factor exceeding the threshold value by defining a boundary about the arrangement and sensorily demarcating the boundary on the factory floor.

In one aspect of the embodiment, the remote sensing includes capturing imagery of at least a portion of the factory and then submitting the captured imagery to a convolutional neural network that has been trained with imagery of object arrangements. Thereafter, a prediction is received from the neural network of the arrangement of the objects on the factory floor.

Other aspects of the embodiment include, as the sensorily demarcation, a projection onto the factory floor of a geometric shape highlighting the defined boundary, an illumination of lighting elements on the factory floor of a geometric shape highlighting the defined boundary, or an illumination of at least one of the objects in the arrangement within the defined boundary.

In another embodiment of the invention, a data processing system is adapted for dynamic demarcation of danger zones in a factory floor. The system includes a host computing platform of one or more computers, each with memory and one or processing units including one or more processing cores. The system also includes a communications bus accessible by the processing units, a digital camera array of cameras each in communication with the host computing platform over the communications bus and a lighting module coupled to lighting elements of the factory floor and in communication with the host computing platform over the communications bus. As well, the system includes a convolutional neural network disposed in the memory and trained to predict object arrangements from imagery of the factory floor.

Finally, the system includes a dynamic danger zone demarcation module. The module includes computer program instructions enabled while executing in the memory of at least one of the processing units of the host computing platform to capture imagery of at least a portion of the factory with the digital camera array of cameras, to submit the captured imagery to the convolutional neural network and to receive from the neural network a prediction of an arrangement of objects on the factory floor. The instructions further are enabled to query a risk factor table in the memory with the arrangement and to receive from the table in response to the querying, a risk factor for the arrangement. Finally, the program instructions are enabled to compare the risk factor to a threshold value and to respond to the risk factor exceeding the threshold value by defining a boundary about the arrangement and directing the lighting module to project onto the factory floor a geometric shape highlighting the defined boundary.

In yet another embodiment of the invention, a device includes a non-transitory computer readable storage medium having program instructions stored therein. The instructions are executable by at least one processing core of a processing unit to cause the processing unit to perform dynamic demarcation of danger zones in a factory floor by remote sensing an arrangement of objects on the factory floor, querying a risk factor table with the arrangement and receiving from the table in response to the querying, a risk factor for the arrangement. The processing unit performs dynamic demarcation further by comparing the risk factor to a threshold value. Finally, the processing unit performs dynamic demarcation by responding to the risk factor exceeding the threshold value by defining a boundary about the arrangement and sensorily demarcating the boundary on the factory floor.

In this way, the technical deficiencies of the hazard detection in a factory setting are overcome owing not merely to the detection of an arrangement of objects on the factory floor which are assessed to present a threshold risk, but also in concert with the definition of a boundary about the arrangement and the sensory demarcation of this boundary, such as by projecting a visualization on the boundary so as to assure that workers remain outside the zone of danger on the factory floor.

Additional aspects of the invention will be set forth in part in the description which follows, and in part will be obvious from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### BRIEF DESCRIPTION OF THE SEVERAL VIEWS OF THE DRAWINGS

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is a pictorial illustration reflecting different aspects of a process of dynamic demarcation of danger zones in a factory floor;
Figure 2 is a block diagram depicting a data processing system adapted to perform one of the aspects of the process of Figure 1; and,
Figure 3 is a flow chart illustrating one of the aspects of the process shown in Figure 1.

### DETAILED DESCRIPTION OF THE INVENTION

Embodiments of the invention provide for dynamic demarcation of danger zones in a factory floor. In accordance with an embodiment of the invention, an arrangement of objects on the factory floor can be remotely sensed and correlated with a risk factor. The risk factor of the arrangement is then compared to a threshold risk beyond which an alert is required of a perceived hazardous presence of objects in a particular arrangement, such as certain types of objects in proximity to a human, or certain types of objects in proximity to other types of objects so that the combination presents a hazardous condition. Thereafter, a boundary about the hazardous condition of the arrangement of objects can be defined, for instance with a radius commensurate with the risk factor, and a remedial sensory demarcation of the boundary can be applied, such as by projecting light onto the boundary or activating in-floor lighting demarcating the boundary. In this way, a demarcation of an area associated with a hazardous condition can be dynamically generated without the limitation of only static positioning of alerts in proximity to additionally static, pre-defined hazardous areas on the factory floor.

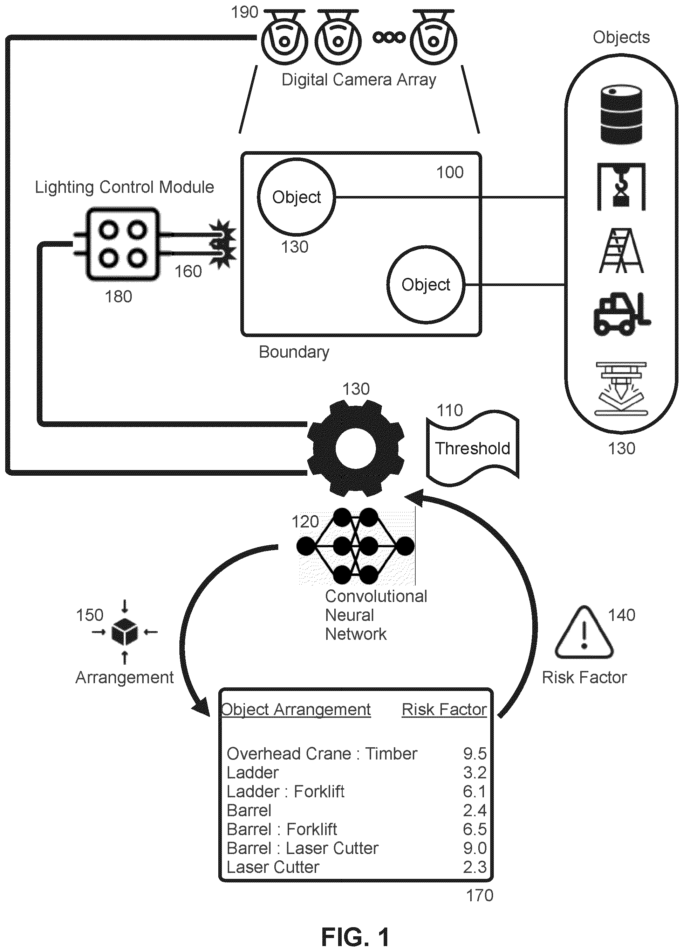

In illustration of one aspect of the embodiment, Figure 1 pictorially shows a process of dynamic demarcation of danger zones in a factory floor. As shown in Figure 1, a digital camera array 190 of cameras capture imagery of a factory floor in order to identify different objects 130, in a particular arrangement such as being proximate to one another, the objects 130 including by way of example, a barrel of material, a crane, a ladder, a forklift or an open flame. Dynamic danger zone demarcation logic 130 submits the captured imagery to a convolutional neural network 120 trained to recognize different arrangements of the objects 130. As such, the convolutional neural network 120 returns a recognized arrangement 150 of the objects 130.

The dynamic danger zone demarcation logic 130 then queries a table 170 of risk factors with the arrangement 150 in order to select a matching object arrangement in the table 170 and to retrieve a correlated risk factor 140. The dynamic danger zone demarcation logic 130 then compares the risk factor 140 to a threshold value 110. To the extent that in the comparison, the dynamic danger zone demarcation logic 130 determines that the risk factor 140 exceeds the threshold value 110, the dynamic danger zone demarcation logic 130 computes a boundary 100 about the objects 130 of the arrangement 150.

In this regard, the dynamic danger zone logic 130 computes the boundary 100,for instance by selecting a point equidistant from the objects 130, determining a radius which can be a function of the risk factor 140 with a larger risk factor producing a larger radius and then defining a geometric shape in accordance with the radio. Finally, the dynamic danger zone demarcation logic 130 directs lighting control module 180 to project light beams 160 onto the factory floor in connection with the determined boundary 100, for example by outlining or otherwise visually highlighting the boundary 100.

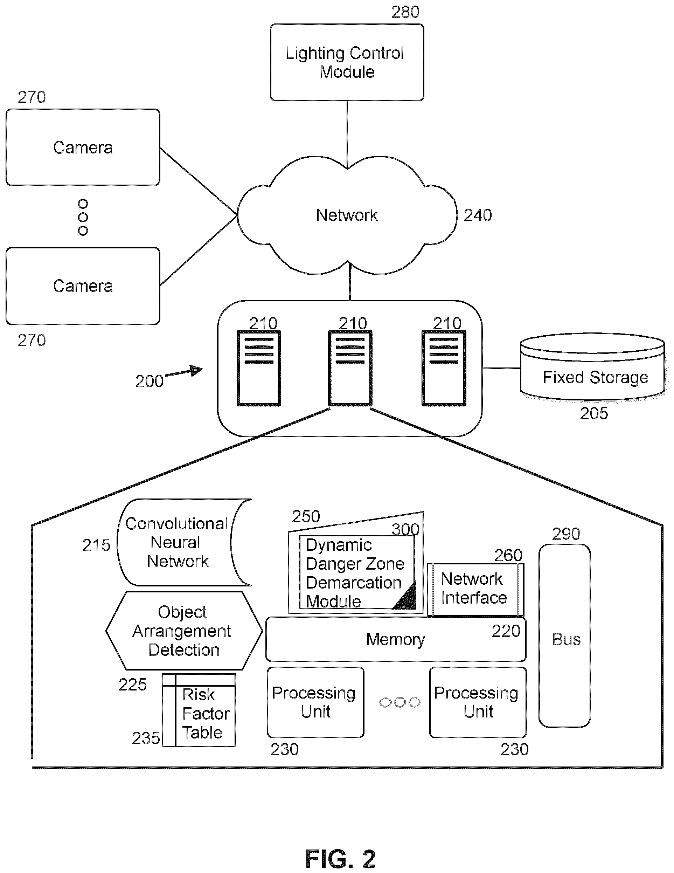

Aspects of the process described in connection with Figure 1 can be implemented within a data processing system. In further illustration, Figure 2 schematically shows a data processing system adapted to perform dynamic demarcation of danger zones in a factory floor. In the data processing system illustrated in Figure 1, a host computing platform 200 is provided. The host computing platform 200 includes one or more computers 210, each with memory 220 and one or more processing units 230. The computers 210 of the host computing platform (only a single computer shown for the purpose of illustrative simplicity) can be co-located within one another and in communication with one another over a local area network, or over a data communications bus 290 and in communication with one another through network interface 260 over a data communications network 240.

Notably, a computing device 250 including a non-transitory computer readable storage medium can be included with the data processing system 200 and accessed by the processing units 230 of one or more of the computers 210. The computing device includes fixed storage 205 and stores 250 thereon or retains therein a program module 300 that includes computer program instructions which when executed by one or more of the processing units 230, performs a programmatically executable process for the dynamic demarcation of danger zones in a factory floor.

Specifically, the program instructions during execution invoke object arrangement detection module to remotely sense an arrangement of object on a factory floor, for instance by receiving camera imagery form cameras 270 from over the data communications network 240 and by submitting the imagery to convolutional neural network 215 which has been trained to identify in imagery, different arrangements of objects. The program instructions then retrieve a detected object arrangement from the object arrangement and detection module 225 and query risk factor table 235 for a risk factor associated with the arrangement.

Finally, the program instructions compares the risk factor to a pre-stored threshold and, to the extent that the risk factor exceeds the pre-stored threshold, the program instructions define a boundary about the arrangement and the program instructions invoke an application programming interface of the lighting control module 280 to visually demarcate the boundary. In this regard, the lighting control module 280 may project lighting within the detected boundary, the lighting control module 280 may activate lighting in the factory floor in order to visually demarcate the boundary, or the lighting control module 280 may activate lighting elements disposed on one or more of the objects within the arrangement.

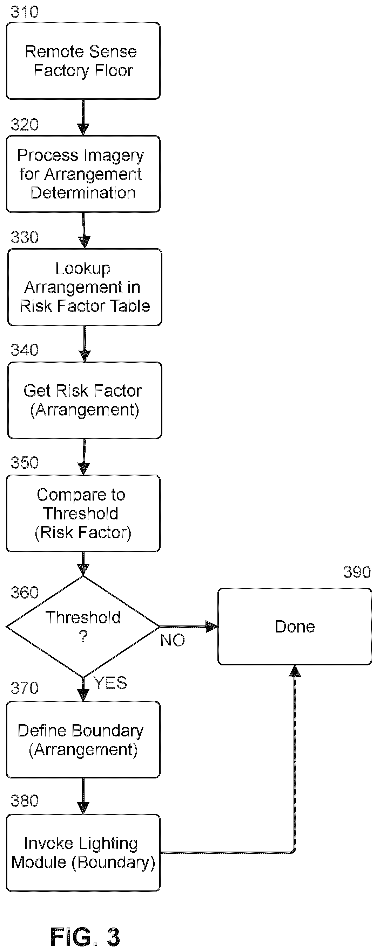

In further illustration of an exemplary operation of the module, Figure 3 is a flow chart illustrating one of the aspects of the process of Figure 1. Beginning in block 305, a factor floor is remotely sensed, such as by way of digital camera imagery. In bloc 320, imagery within the remote sensing of the factory are processed to determine an arrangement of the objects to one another. Then, in block 330, the determined arrangement is used to query a risk factor table and to retrieve a risk factor from the table in block 340. As such, in block 350 a comparison is performed between the risk factor of the table and a threshold risk factor.

In decision block 360, if it is determined that the risk factor exceeds the threshold, in block 370 a boundary is defined for an area of the factory floor enveloping the encompassing the objects of the arrangement. Finally, in block 380 a lighting scheme is invoked so as to visually demarcate the boundary. The process then ends in block 390.

Of import, the foregoing flowchart and block diagram referred to herein illustrate the architecture, functionality, and operation of possible implementations of systems, methods, and computing devices according to various embodiments of the present invention. In this regard, each block in the flowchart or block diagrams may represent a module, segment, or portion of instructions, which includes one or more executable instructions for implementing the specified logical function or functions. In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

More specifically, the present invention may be embodied as a programmatically executable process. As well, the present invention may be embodied within a computing device upon which programmatic instructions are stored and from which the programmatic instructions are enabled to be loaded into memory of a data processing system and executed therefrom in order to perform the foregoing programmatically executable process. Even further, the present invention may be embodied within a data processing system adapted to load the programmatic instructions from a computing device and to then execute the programmatic instructions in order to perform the foregoing programmatically executable process.

To that end, the computing device is a non-transitory computer readable storage medium or media retaining therein or storing thereon computer readable program instructions. These instructions, when executed from memory by one or more processing units of a data processing system, cause the processing units to perform different programmatic processes exemplary of different aspects of the programmatically executable process. In this regard, the processing units each include an instruction execution device such as a central processing unit or "CPU" of a computer. One or more computers may be included within the data processing system. Of note, while the CPU can be a single core CPU, it will be understood that multiple CPU cores can operate within the CPU and in either instance, the instructions are directly loaded from memory into one or more of the cores of one or more of the CPUs for execution.

Aside from the direct loading of the instructions from memory for execution by one or more cores of a CPU or multiple CPUs, the computer readable program instructions described herein alternatively can be retrieved from over a computer communications network into the memory of a computer of the data processing system for execution therein. As well, only a portion of the program instructions may be retrieved into the memory from over the computer communications network, while other portions may be loaded from persistent storage of the computer. Even further, only a portion of the program instructions may execute by one or more processing cores of one or more CPUs of one of the computers of the data processing system, while other portions may cooperatively execute within a different computer of the data processing system that is either co-located with the computer or positioned remotely from the computer over the computer communications network with results of the computing by both computers shared therebetween.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Having thus described the invention of the present application in detail and by reference to embodiments thereof, it will be apparent that modifications and variations are possible without departing from the scope of the invention defined in the appended claims as follows:

## Claims

1. A method for dynamic demarcation of danger zones in a factory floor comprising:
remote sensing an arrangement of objects on the factory floor;
determining a risk factor for the arrangement;
comparing the risk factor to a threshold value; and,
responsive to the risk factor exceeding the threshold value, defining a boundary about the arrangement and sensorily demarcating the boundary on the factory floor.

2. The method of claim 1, wherein the remote sensing is a capturing of imagery of at least a portion of the factory, the submission of the captured imagery to a convolutional neural network trained with imagery of object arrangements, and the receipt from the neural network of a prediction of the arrangement of the objects on the factory floor.

3. The method of claim 1, wherein the arrangement is a proximity of one object to another object on the factory floor.

4. The method of claim 1, wherein the arrangement is a proximity of an object on the factory floor to a location at which a human is proximate.

5. The method of claim 1, wherein the sensorily demarcation is a projection onto the factory floor of a geometric shape highlighting the defined boundary.

6. The method of claim 1, wherein the sensorily demarcation is an illumination of lighting elements on the factory floor of a geometric shape highlighting the defined boundary.

7. The method of claim 1, wherein the sensorily demarcation is an illumination of at least one of the objects in the arrangement within the defined boundary.

8. The method of claim 1, wherein a radius of the boundary is computed as a function of the risk factor.

9. A data processing system adapted for dynamic demarcation of danger zones in a factory floor, the system comprising:
a host computing platform comprising one or more computers, each with memory and one or processing units including one or more processing cores;
a communications bus accessible by the processing units;
a digital camera array of cameras each in communication with the host computing platform over the communications bus;
a lighting module coupled to lighting elements of the factory floor and in communication with the host computing platform over the communications bus;
a convolutional neural network disposed in the memory and trained to predict object arrangements from imagery of the factory floor; and,
a dynamic danger zone demarcation module comprising computer program instructions enabled while executing in the memory of at least one of the processing units of the host computing platform to perform:
capturing of imagery of at least a portion of the factory with the digital camera array of cameras, submitting the captured imagery to the convolutional neural network and receiving from the neural network a prediction of an arrangement of objects on the factory floor;
determining a risk factor for the arrangement;
comparing the risk factor to a threshold value; and,
responsive to the risk factor exceeding the threshold value, defining a boundary about the arrangement and directing the lighting module to project onto the factory floor a geometric shape highlighting the defined boundary.

10. A computing device comprising a non-transitory computer readable storage medium having program instructions stored therein, the instructions being executable by at least one processing core of a processing unit to cause the processing unit to perform dynamic demarcation of danger zones in a factory floor by:
remote sensing an arrangement of objects on the factory floor;
determining a risk factor for the arrangement;
comparing the risk factor to a threshold value; and,
responsive to the risk factor exceeding the threshold value, defining a boundary about the arrangement and sensorily demarcating the boundary on the factory floor.
